# EUROPEAN PATENT SPECIFICATION

(11) **EP 4 285 427 B1**
(45) Date of publication and mention of the grant of the patent: **06.05.2026**
(21) Application number: 22746528.3
(22) Date of filing: 26.01.2022
(51) Int. Cl.: H01M 8/10, H01M 8/1004, H01M 8/023, H01M 8/2457, C25B 1/04, C25B 9/19, C25B 9/60

(54) **ELECTROCHEMICAL CELL, AND METHOD OF FORMING A PLURALITY OF INTERCONNECTED LAYERS FOR AN ELECTROCHEMICAL CELL**
ELEKTROCHEMISCHE ZELLE, UND VERFAHREN ZUR HERSTELLUNG MEHRERER MITEINANDER VERBUNDENER SCHICHTEN FÜR EINE ELEKTROCHEMISCHE ZELLE
CELLULE ÉLECTROCHIMIQUE, ET PROCÉDÉ DE FORMATION D'UNE MULTITUDE DE COUCHES INTERCONNECTÉES POUR UNE CELLULE ÉLECTROCHIMIQUE

(30) Priority: 26.01.2021 US 202163141738 P
(43) Date of publication of application: 06.12.2023
(73) Proprietor: Electric Hydrogen Co., Devens, Massachusetts 01434 (US)
(72) Inventor: EAGLESHAM, David, Devens, MA 01434 (US); GOBRON, Danielle, Devens, MA 01434 (US); TRIVEDI, Jigish, San Carlos, CA 94070 (US); SAJJAD, Syed Dawar, Devens, MA 01434 (US)
(74) Representative: Knöner, Gregor
(86) International application number: PCT/US2022/013890
(87) International publication number: WO 2022/164896

(56) References cited:
- EP-A1- 3 285 319
- WO-A1-2020/020467
- WO-A1-2020/020467
- DE-A1- 102018 105 115
- DE-A1- 102018 105 115
- JP-A- 2000 058 073
- JP-A- 2012 094 438
- US-A1- 2007 298 267
- US-A1- 2007 298 267
- US-A1- 2014 004 444

## Description

This application claims the benefit of U.S. Provisional Patent Application No. 63/141,738, filed January 26, 2021.

### FIELD

The present invention relates to electrochemical or electrolysis cells and components thereof. More specifically, the following disclosure relates to an electrochemical cell, and to a method of forming a plurality of interconnected layers for an electrochemical cell (see claims 1 and 15), e.g. low electrical impedance cells having interconnecting layers.

### BACKGROUND

An electrochemical or electrolysis cell or system uses electrical energy to drive a chemical reaction. For example, within a water splitting electrolysis reaction within the electrolysis cell, water is split to form hydrogen and oxygen. The products may be used as energy sources for later use. In recent years, improvements in operational efficiency have made electrolyzer systems competitive market solutions for energy storage, generation, and/or transport. For example, the cost of generation may be below $10 per kilogram of hydrogen in some cases. Increases in efficiency and/or improvements in operation will continue to drive installation of electrolyzer systems.

For example, various challenges are present with operation at the membrane of an electrolysis cell. These challenges are not well described within the literature and are not fully appreciated in the field. For example, at the interface, a 4- or 5-fold junction is required at which a catalyst (e.g., IrOx catalyst) is supplied with water and electricity. Additionally, at the interface, protons and gas are needed to be removed. In other words, an electrolysis cell requires a 5-way interface between catalyst, water, electrical conductor, proton transport, and bubble formation/gas transport. However, this need for multiple interfaces is not fully appreciated in the literature and as a result the requirement is not well incorporated into existing state-of-the-art PEM systems. The current best-in-class commercial PEM electrolyzers do not have interfaces designed to optimize the transport and fluxes outlined above.

The central PEM/catalyst/water/gas interface is accomplished by randomly coating a catalyst and PEM material (ionomer) onto one or both of a Proton Exchange Membrane (PEM) layer plus a porous gas diffusion layer (GDL) that permits liquids and gases to flow through the holes while the solid material conducts electricity. The PEM layer and the GDL are then joined with the hope that the desired multi-way junctions are present. This is especially problematic for the anode GDL. The anode side is traditionally the rate-limiting reaction, owing to slower catalyst kinetics and the requirement for larger overpotential. Moreover, because the anode GDL sits in an oxidizing acidic environment, it is typically made of platinum-coated titanium. Titanium is a poor conductor, and the platinum is very expensive.

Therefore, there is a desire to improve the interface to improve electrical conductivity and increase the density of "5-way junctions" and reduce costs, while maintaining fluid flow and bubble/gas removal.

Electrical conductivity is the most crucial problem in that the impedance is far too high within the current state of the art. For example, as disclosed in Papakonstaniou et al., Applied Energy 280 (2020) 115911, more than 50% of the system losses come from "CLs+contacts" plus "hardware." These losses not only drive energy loss in the system but create enormous heat loads in the system and thermal management problems at the system level. While the existing state-of-the-art designs are adequate for historical applications of PEM electrolysis (e.g., making oxygen on submarines) they are inadequate for the anticipated future applications (e.g., making hydrogen for fertilizer manufacturing or hydrogen to reduce iron ore in steel production).

The document WO 2020/020467 A1 (describing the preamble of claims 1 and 15) relates to a porous transport layer for an electrochemical cell consisting of a mixture of metal powder and binder.

The document JP 2012 094438 A describes a fuel cell power generation system having a diffusion layer with a pore-shaped communication hole.

The document DE 10 2018 105 115 A1 relates to an electrolyzer having a carrier element layer formed as a mesh structure.

The document US 2007/0298267 A1 discloses an electrically conductive element for an electrochemical cell having an enhanced protection for an underlying metal substrate.

Therefore, there remains a desire to improve the interface to minimize impedance losses arising from electrical transport and proton transport, while maintaining maximum access for flowing liquid and egress for produced gases.

### SUMMARY

The invention is defined in the independent claims. The dependent claims describe embodiments of the invention.

In one embodiment, an electrochemical cell is defined in claim 1, the cell includes an electrode, a membrane,
and the plurality of interconnecting layers positioned between the electrode and the membrane. The plurality of interconnecting layers includes a local interconnecting layer positioned adjacent to the membrane and a global interconnecting layer positioned adjacent to the electrode. Further, the plurality of interconnecting layers provides a vertical conduction in a direction extending along an axis running between the electrode and the membrane.

In another embodiment, a method of forming a plurality of interconnected layers for an electrochemical cell is defined in claim 15. The method includes positioning at least one mid-level interconnecting layer on a surface of a global interconnecting layer; positioning a local interconnecting layer on a surface of a mid-level interconnecting layer of the at least one mid-level interconnecting layer such that the at least one mid-level interconnecting layer is positioned between the local interconnecting layer and the global interconnecting layer; covering at least one surface of the local interconnecting layer with a mask layer; applying a coating to the plurality of interconnecting layers, wherein the coating covers surfaces of the at least one mid-level interconnecting layer and the global connecting layer with the mask layer prevents the local interconnecting layer from being coated; and removing the mask layer from the local interconnecting layer.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Exemplary embodiments are described herein with reference to the following drawings.
Figure 1 depicts an example of an electrolytic cell.
Figure 2 depicts an additional example of an electrolytic cell.
Figure 3 depicts an example of interconnecting layers positioned between an electrode or conductor (e.g., anode or cathode) and a membrane (e.g., ion exchange membrane). In this example, the plurality of interconnecting layers on each side of the membrane includes at least three layers extending from an ultra-fine local interconnecting layer to a mid-level interconnecting layer to a global interconnecting layer.
Figures 4-8 depict examples of additional, alternative arrangements for the plurality of interconnecting layers.
Figures 9-14 depict additional examples of an arrangement of a single interconnecting layer of the plurality of interconnecting layers.
Figures 15A-15E depict examples of various stages of coating the plurality of interconnecting layer.
Figures 16-23 depict additional examples of an arrangement for the global interconnecting layer.

While the disclosed compositions and methods are representative of embodiments in various forms, specific embodiments are illustrated in the drawings (and are hereafter described), with the understanding that the disclosure is intended to be illustrative and is not intended to limit the claim scope to the specific embodiments described and illustrated herein.

### DETAILED DESCRIPTION

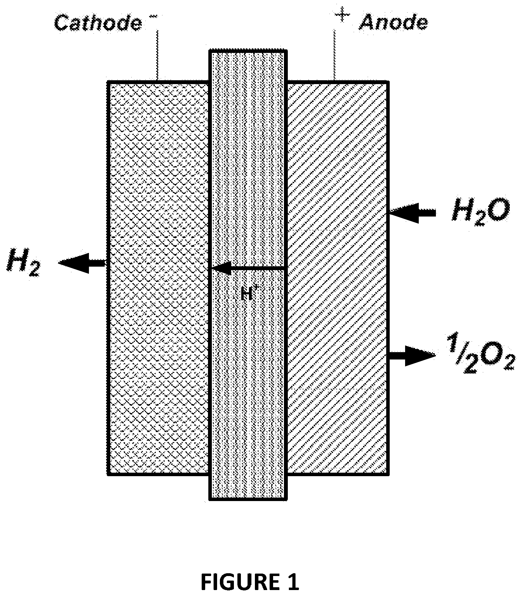

Figure 1 depicts an example of an electrochemical or electrolytic cell for hydrogen gas and oxygen gas production through the splitting of water. The electrolytic cell includes a cathode, an anode, and a membrane positioned between the cathode and anode. The membrane may be a proton exchange membrane (PEM). Proton Exchange Membrane (PEM) electrolysis involves the use of a solid electrolyte or ion exchange membrane. Within the water splitting electrolysis reaction, one interface runs an oxygen evolution reaction (OER) while the other interface runs a hydrogen evolution reaction (HER). For example, the anode reaction is H₂O→2H⁺+½O₂+2e and the cathode reaction is 2H⁺+2e→H₂. The water electrolysis reaction has recently assumed great importance and renewed attention as a potential foundation for a decarbonized "hydrogen economy."

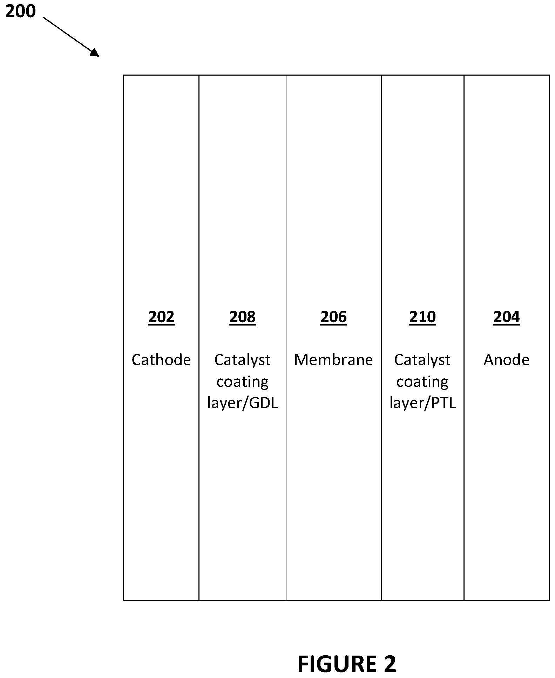

Figure 2 depicts an additional example of an electrochemical or electrolytic cell. Specifically, Figure 2 depicts a portion of an electrochemical cell 200 having a cathode 202, an anode 204, and a membrane 206 positioned between the cathode 202 and the anode 204.

In this particular example, the membrane 206 may have an overall thickness that is less than 1000 microns, 500 microns, 100 microns, 50 microns, 10 microns, etc.

In certain examples, additional layers may be present within the electrochemical cell 200. For example, one or more additional layers 208 may be positioned between the cathode 202 and membrane 206. In certain examples, this may include a cathode catalyst coating layer. Additionally, or alternatively, a gas diffusion layer (GDL) may be positioned between the cathode 202 and membrane 206. This may be advantageous in providing a hydrogen diffusion barrier adjacent to the cathode on one side of the multi-layered membrane to mitigate hydrogen crossover to the anode side. In some examples, a cathode catalyst coating layer may be positioned between the cathode 202 and the GDL.

Similarly, one or more additional layers 210 may be present in the electrochemical cell between the membrane 206 and the anode 204. In certain examples, this may include an anode catalyst coating layer. Additionally, or alternatively, a porous transport layer (PTL) may be positioned between the membrane 206 and the anode 204. In some examples, an anode catalyst coating layer may be positioned between the anode 204 and the PTL.

Further, while not depicted in Figure 2, a current collector plate may be positioned on an exterior surface of the anode or cathode, opposite from the GDL or PTL.

An improved electrochemical or electrolysis cell is desired to operate with 200 mV or less of pure resistive loss when operating at a high current density (e.g., at least 3 Amps/cm², at least 4 Amps/cm², at least 5 Amps/cm², at least 6 Amps/cm², at least 7 Amps/cm², at least 8 Amps/cm², at least 9 Amps/cm², or at least 10 Amps/cm²). Currently, existing commercial electrolysis cells are usually operated at 1 Amps/cm² and at most 2 Amps/cm2 and have 200 mV of resistive loss when operating at 2 Amps/cm².

In other words, various layers within current commercial cells may have an implied resistivity of an intervening layer of the cell that is 100x higher than the materials actually used (e.g., Ti and carbon), even taking into account the porosity of the material.

A problem with current existing cells is through the use of poorly interconnected layers of materials in the cell or stack of cells. These layers are selected in order to make the conductor porous to both gases and liquids (e.g., the porous transport layer (PTL), gas diffusion layer (GDL), etc.).

One example of a currently existing cell or stack of cells with poorly interconnected layers of materials includes a cell having the following layers: (1) a Ti flow-plate layer (bipolar plate), (2) a Ti mesh layer, (3) a fine Ti mesh layer, (4) a Ti felt layer, (5) a catalyst coated membrane (CCM) layer, (6) a carbon felt or paper layer, (7) a carbon porous media layer, and (8) a Ti flow-plate layer. The materials in some cases may have conductivity which is anisotropic in the "wrong" direction. For example, the Ti felt including strands of Ti arranged mostly parallel to the plane of the layer and thus better at conducting parallel to the plane than perpendicular to the plane (i.e., bad at conducting electrons from the bipolar plate to the PEM membrane). In addition, in an existing best-in-class commercial proton exchange membrane (PEM), all these layers are joined together through simple mechanical pressure. For example, the Ti mesh layer is mechanically pressed up against the Ti flow-plate in order to produce electrical connection. As a result, the electrical conductivity in a state-of-the-art cell or stack is limited not just by the conductivity of the materials (Ti) but by the junctions, which in the case of Ti-Ti junctions may be partially oxidized (Ti-TiO₂-TiO₂-Ti).

As disclosed herein, an improved cell stack with a lower impedance may be developed through a plurality of interconnecting layers positioned between an electrode and a membrane of a cell. The arrangement of interconnecting layers may be arranged in an analogous manner to an integrated circuit's connectivity between layers (except that the SiO₂ dielectric layers in the integrated circuit (IC) would be etched away to provide a porous medium). In certain examples, the plurality of interconnecting layers within an electrochemical cell of a cell stack allows for an improved, lower impedance that is less than 5 ohms, 4 ohms, 3 ohms, 2 ohms, 1 ohm, or 0.5 ohms, or in a range of 0.1-5 ohms, 0.1-2 ohms, or 0.1-1 ohm, for example.

Within this improved cell arrangement, the layers would be joined to provide vertical conduction down the "vias" from the top layer to the bottom layer of the cell or stack (i.e., an electrical connection in a direction perpendicular to the planes of the layers within the cell/stack). This vertical conduction provides an improvement over the conduction within the Ti felts and meshes of a conventional cell stack that occurs primarily in a lateral direction (along the direction of a layer of a plane), wherein the junctions are primarily created by the pressing of the components/layers together. Additionally, the cell arrangement having the plurality of interconnecting layers provides allows for reduced impedance losses over conventional configurations.

The requirements of this "interconnect" are to optimize electrical transport perpendicular to the plane of the membrane (i.e., from the bipolar plate to the PEM interface) while permitting flow of liquid and gas. This portion of the device may be analogous to a "global interconnect" in a semiconductor integrated circuit.

In addition, within the improved cell stack disclosed, an improved connection and arrangement of layers between an electrode (anode or cathode) and a membrane is provided herein. For example, in order to maximize a rate of reaction, it is important to maximize the number of 4-phase junctions (i.e., the number of metal/PEM/catalyst/liquid interfaces). The requirements of this "reaction layer" are different from the interconnect. For example, this layer is required to maximize the number of multi-phase interfaces and also provide electron access to those interfaces (i.e., electrical conduction parallel to the plane of the membrane). This portion of the device may be analogous to a "local interconnect" in a semiconductor integrated circuit.

This may be accomplished with a plurality of interconnecting layers between the electrode and membrane having openings or gaps between material of the interconnecting layer that are smaller than the membrane film thickness. The porosity of these interconnecting layers is also important to be at least 30%, at least 40%, at least 50%, at least 60%, or at least 70%.

The plurality of interconnecting layers may include a global interconnecting layer positioned adjacent to the electrode and a local interconnecting layer positioned adjacent to the membrane of the cell. One or more additional interconnecting layers (e.g., a mid-level interconnecting layer) may be positioned between the global interconnecting layer and the local interconnecting layer.

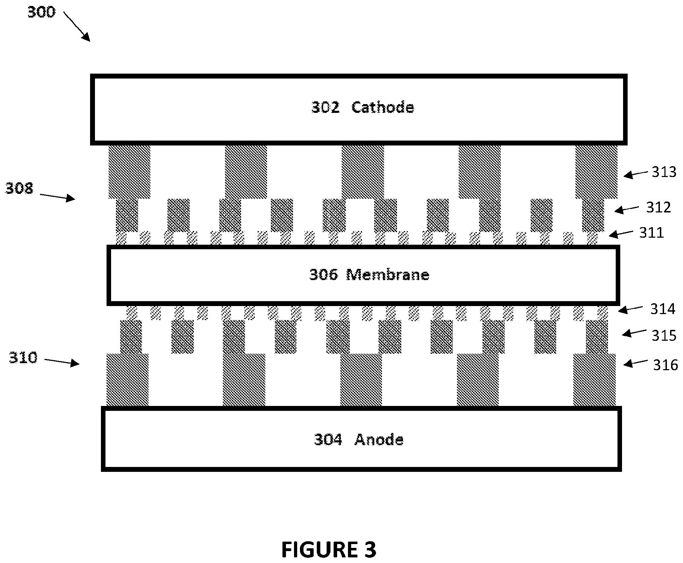

Figure 3 depicts an example of a cell 300 with a first plurality of interconnecting layers 308 positioned between the cathode 302 and the membrane 306 and a second plurality of interconnecting layers 312 positioned between the anode 304 and the membrane 306.

The plurality of interconnecting layers may have a hierarchical connection structure going from an ultra-fine local-interconnecting layer to a larger global-interconnecting layer.

For example, as depicted in Figure 3, the first plurality of interconnecting layers 308 includes three layers 311, 312, 313 having such a hierarchical connection structure beginning with an ultra-fine local interconnecting layer 311 near or adjacent to the membrane 306 and extending to a mid-level interconnecting layer 312 and then to a global interconnecting layer 313 near or adjacent to the cathode 302.

Similarly, the second plurality of interconnecting layers 310 includes three layers 314, 315, 316 having a hierarchical connection structure beginning with an ultra-fine local interconnecting layer 314 adjacent to the membrane 306 and extending to a mid-level interconnecting layer 315 and then to a global interconnecting layer 316 adjacent to the anode 304.

In this example, the first and second pluralities of interconnecting layers may include similar or different materials for each of the interconnecting layers on each side of the membrane (e.g., the local interconnecting layers 311 and 314 may be made of a same composition and/or include similar properties, or the local interconnecting layers 311 and 314 may be made from different compositions, etc.)

While not depicted in Figure 3, additional layers may be present in the cell 300. For example, a coating layer could be positioned between the membrane and one or both of the local interconnecting layers. Additionally, or alternatively, one or more layers could be positioned between a global interconnecting layer and the adjacent electrode.

### Local Interconnecting Layer

In certain examples, the local interconnecting layer of the plurality of interconnecting layers may be configured to serve a small region of the interface and therefore carry modest currents. This may be accomplished with an ultra-fine (and ultra-thin) composition (e.g., metal or polymer) that advantageously maximizes interfacial area.

As noted above, the local interconnecting layer is configured to advantageously provide electron access to the interface (i.e., electrical conduction parallel to the plane of the membrane). Additionally, the local interconnecting layer (in combination with the additional interconnecting layers) is configured to advantageously provide vertical conduction (perpendicular to the planes of the interconnecting layers).

In certain examples, the composition used in the local interconnecting layer may be any type of electrical transport "conducting material." The conducting material of the local interconnecting layer may include a metal composition. The metal composition may be an oxidation-resistant metal such as, but not limited to, Pt, Au, Ti, Cr, Si, Zr, Y, Nb, and/or Al. This oxidation-resistant metal may be particularly advantageous in limiting corrosion on the anode side of the cell from the oxygen generated in the water splitting reaction.

In other examples, the composition or conducting material of the local interconnecting layer may include a substrate (e.g., metal or polymer) that is coated with Pt, Nb, conducting oxides (such as W- or Nb-doped TiO₂, SnO₂, AZO), and/or other compositions. In some examples, the coating is a ternary layered carbide or nitride compound that may have the general formula Mₙ₊₁AXₙ, where n = 1-3, M is an early transition metal, A is an A group element, and X is nitrogen or carbon (i.e., a "MAX phase material"). Specific examples of such MAX phase materials include TiAlN, Ti₂AlC, TiSiC, and the like.

Alternatively, the composition of the local interconnecting layer may include a conducting material such as a conducting polymer or any oxygen-stable conducting organic composition. Non-limiting examples of a conducting polymer include poly(3,4-ethlenedioxythiophene) (PEDOT), poly(3,4-ethylenedioxythiophene) polystyrene sulfonate (PEDOT:PSS), polyaniline (PANI), polypyrrole (PPy), and derivatives thereof.

In certain examples, the conducting material for the local interconnecting layer may include an oxidation resistant metal combined with a conducting polymer. For example, gold (Au) may be combined with PEDOT to provide the conducting material for the interconnecting layer.

The composition of the local interconnecting layer may be determined or configured based on whether it is positioned on the anode or cathode side of the membrane, i.e., whether the layer is a part of the interface running an oxygen evolution reaction (OER) on the anode side of the cell or the interface running a hydrogen evolution reaction (HER) on the cathode side of the cell.

Various patterns or configurations for the local interconnecting layer are possible. In one example, fine patterned lines of the (e.g., metal or polymer conducting) composition may extend along a single direction within a plane of the cell, wherein a gap or opening is present within the layer between adjacent lines. These patterned lines may be formed via low-cost patterning methods including extrusion, deposition, three-dimensional printing, or non-lithographic methods.

Alternatively, the pattern of the local interconnecting layer may include a mesh or web pattern. The pattern may include fine pattered lines extending in two directions, perpendicular with each other to form a weave or mesh having square or rectangular openings present between the connected lines. In other examples, the web pattern may include an arrangement of the composition with openings in the layer in varying shapes such as circular, triangular, or hexagonal openings, etc. These patterns may be formed via similar methods as discussed above. Alternatively, the pattern could be formed via the formation of openings in a singular sheet of material (e.g., via laser ablation), wherein material is removed from the sheet to form the openings/pattern in the layer.

The size or dimensions of lines or patterns of material within the local interconnecting layer may also be configurable. In certain examples, the fine patterned lines of metal or polymer composition that make up the local interconnecting layer may have a thickness or diameter on a micrometer scale (e.g., a diameter or width of less than 100 µm (microns)). In some examples, the lines or wires of material may have a diameter or width (as measured along the plane of material) and/or height (as measured perpendicular to the plane of the layer of material) in a range of 1-50 micrometers (microns), 5-40 microns, 10-30 microns, 10-20 microns, or 20-30 microns.

Further, openings or holes between adjacent segments of material of the local interconnecting layer (e.g., as measured between adjacent lines of material running in a same direction or as defined by the widest measurement of an opening of a circular, rectangular, hexagonal, etc. patterned opening) may be in a range of 5-100 microns, 10-50 microns, 20-40 microns, or about 30 microns.

### Global Interconnecting Layer

In certain examples, the global interconnecting layer of the plurality of interconnecting layers may be configured to provide a larger region of the interface and therefore carry larger currents in comparison to the local interconnecting layer. The global interconnecting layer is also configured to provide a flow field support for fluid flow in and out from the water splitting reaction at the membrane toward the adjacent electrode (e.g., generated oxygen and unreacted water flowing out on the anode side of the electrolytic cell, or generated hydrogen and potential water byproduct flowing out on the cathode side of the electrolytic cell). In other words, the global interconnecting layer advantageously optimizes electrical transport perpendicular to the plane of the membrane (i.e., from the bipolar plate to the membrane interface) while permitting flow of liquid and gas.

In certain examples, the composition used in the global interconnecting layer may be any type of electrical transport "conducting material." The conducting material of the global interconnecting layer may include a metal composition that is the same as or different from the metal composition of the local interconnecting layer. In certain embodiments, the metal composition of the global interconnecting layer includes stainless steel. Stainless steel may be advantageous for the global interconnecting layer material as it provides a certain rigidity is needed to support pressure differences across the membrane. In some examples, the pressure difference across the membrane may be 30 atm. As such, l-beam struts of stainless steel may be used within an interconnecting layer to provide sufficient mechanical support.

Alternatively, the metal composition may be an oxidation-resistant metal such as, but not limited to, Pt, Au, Ti, Cr, Si, Zr, Y, Nb, and/or Al. In other examples, the composition or conducting material of the global interconnecting layer may include a substrate (e.g., metal or polymer) that is coated with Pt, Nb, conducting oxides (such as W- or Nb-doped TiO₂, SnO₂, AZO), and/or other compositions. In some examples, the coating is a ternary layered carbide or nitride compound that may have the general formula Mₙ₊₁AXₙ, where n = 1-3, M is an early transition metal, A is an A group element, and X is nitrogen or carbon (i.e., a "MAX phase material"). Specific examples of such MAX phase materials include TiAlN, Ti₂AlC, TiSiC, and the like.

In other examples, the composition of the global interconnecting layer may include a conducting material such as a conducting polymer or any oxygen-stable conducting organic composition. Non-limiting examples of a conducting polymer include poly(3,4-ethlenedioxythiophene) (PEDOT), poly(3,4-ethylenedioxythiophene) polystyrene sulfonate (PEDOT:PSS), polyaniline (PANI), polypyrrole (PPy), and derivatives thereof.

In certain examples, the conducting material for the global interconnecting layer may include an oxidation resistant metal combined with a conducting polymer. For example, gold (Au) may be combined with PEDOT to provide the conducting material for the interconnecting layer.

The composition of the global interconnecting layer may be determined or configured based on whether it is positioned on the anode or cathode side of the membrane, i.e., whether the layer is a part of the interface running an oxygen evolution reaction (OER) on the anode side of the cell or the interface running a hydrogen evolution reaction (HER) on the cathode side of the cell.

Various patterns or configurations for the global interconnecting layer are possible. In one example, patterned lines of the (e.g., metal or polymer conducting) composition may extend along a single direction within a plane of the cell, wherein a gap or opening is present within the layer between adjacent lines. These patterned lines may be formed via low-cost patterning methods including extrusion, deposition, three-dimensional printing, or non-lithographic methods.

The patterned lines for the global interconnecting layer may have thicker lines (as measured along the plane of material and/or as measured perpendicular to the plane of the layer of material) in comparison to the thickness of the lines of the local interconnecting layer (or an adjacent mid-level interconnecting layer, if present).

The global interconnecting layer may have conducting lines or segments configured to aggregate multiple local interconnecting conductor segments (or mid-level segments, if a mid-level layer is present), and so accumulate larger amounts of current (per conductor) and require larger conductor dimensions.

In some embodiments, the patterned lines of the global interconnecting layer may extend in a separate direction from the adjacent interconnecting layer (e.g., the local interconnecting layer or a mid-level interconnecting layer positioned between the local and global layers). The separate direction may be perpendicular to the direction of patterned lines of the adjacent layer or at an angle between 0° and 90° (e.g., 45°). This separate direction of the patterned lines between two adjacent layers is advantageous in creating an interconnecting structure between various patterned lines or segments of each layer. For example, with a perpendicular arrangement between the two adjacent layers, one line segment from the global interconnecting layer is in contact with a plurality (e.g., all) of the linear segments of the adjacent, local interconnecting layer. This is advantageous in improving or optimizing the conductivity and electrical transport perpendicular to the plane of the membrane (i.e., from the membrane to the electrode) while permitting flow of liquid and gas between the various layers.

In certain alternative examples, the pattern of the global interconnecting layer may include a mesh or web pattern. The pattern may be similar or different from the web pattern of the local interconnecting layer. For example, the pattern may have lines extending in two directions, perpendicular with each other to form a weave or mesh having square or rectangular openings present between the connected lines. In other examples, the web pattern may include an arrangement of the composition with openings in the layer in varying shapes such as circular, triangular, or hexagonal openings, etc. These patterns may be formed via similar methods as discussed above. Alternatively, the pattern could be formed via the formation of openings in a singular sheet of material (e.g., via laser ablation), wherein material is removed from the sheet to form the openings/pattern in the layer.

In yet other examples, the configuration for the global interconnecting layer may have a single (e.g., folded metallic) structure having a plurality of ridges or fins extending the direction from the membrane to the electrode, perpendicular to the planes of the interconnecting layers. These fins advantageously provide flow field channels for the oxygen or hydrogen gas produced in the water splitting reaction to transfer out of the cell.

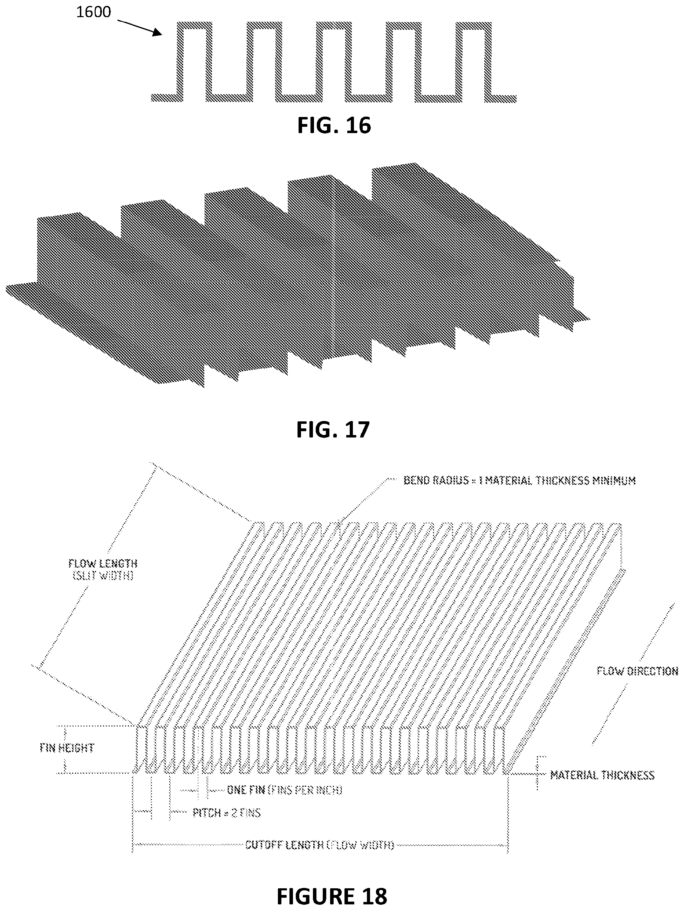

Figures 16-23 depict examples of such an arrangement for the global interconnecting layer. For example, Figure 16 depicts a cross-sectional view of a global interconnecting layer 1600 having rectangular shaped ridges having one end of the ridge adjacent to the local or mid-level layer and an opposite end of the ridge that is adjacent to the electrode. The singular shape of this pattern provides troughs or flow channels between the ridges. Figures 17 and 18 depict different viewpoints of the example of Figure 16. In Figure 18, descriptions are identified for the flow length (slit width), flow width, bend radius of the ridges, fin height, flow direction, thickness, and pitch. These dimensions are configurable based on the size of the cell, wherein, as a part of the global interconnecting layer, may have a wider fin length in comparison with the adjacent interconnecting layer.

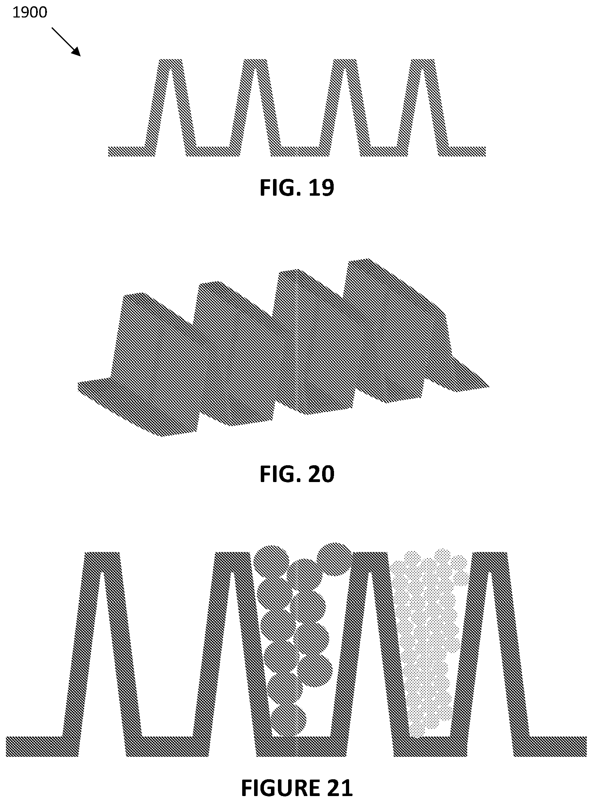

Figure 19 depicts a cross-sectional view of an alternative example 1900 of a ridged or fin-shaped global interconnecting layer having a V-shaped fin structure. Figures 20 and 21 depict a different viewpoint of the example of Figure 19.

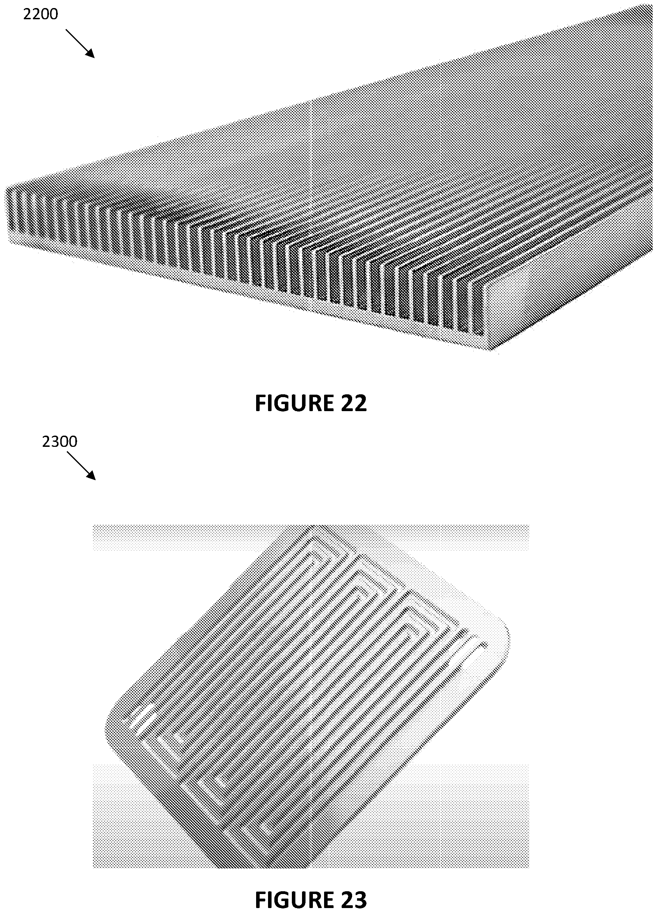

Further examples of fin or ridge-patterned global interconnecting layers are provided in Figures 22 and 23. In Figure 22, the global interconnecting layer arrangement 2200 includes a series of fin protrusions extend from a base to provide the flow channels. In Figure 23, the global interconnecting layer arrangement 2300 includes a snake-like pattern of ridges within the global interconnecting layer.

The size or dimensions of lines, patterns, or ridges of material within the global interconnecting layer may also be configurable. In certain examples, patterned lines of metal or polymer composition that make up the global interconnecting layer may have a thickness or diameter (as measured along the plane of material) and/or height (as measured perpendicular to the plane of the layer of material) that is larger than the adjacent interconnecting layer that is closer to the membrane (e.g., the local layer or a mid-level layer, if present).

In some examples, the thickness of the lines or patterns of material within the global interconnecting layer may be on a millimeter scale (e.g., a diameter or width of greater than 100 microns/0.1 mm). In some examples, the lines or wires of material may have a diameter or width (as measured along the plane of material) and/or height (as measured perpendicular to the plane of the layer of material) in a range of 0.1-10 mm, 0.2-5 mm, 0.5-2 mm, 0.5-1 mm, 1-2 mm, or approximately 0.7 mm.

Further, openings or holes between adjacent segments of material of the global interconnecting layer (e.g., as measured between adjacent lines of material running in a same direction or as defined by the widest measurement of an opening of a circular, rectangular, hexagonal, etc. patterned opening) may be in a range of 0.1-10 mm, 0.2-5 mm, 0.5-2 mm, 0.5-1 mm, 1-2 mm, 1-1.5 mm, or approximately 1.2 mm.

### Additional Intermediate (Mid-Level) Interconnecting Layer(s)

In certain examples, at least one intermediate or mid-level interconnecting layer may be present between the local and global interconnecting layers. This at least one mid-level interconnecting layer may be configured to provide a bridge in conductivity and flow field support between the local and global layers. In other words, the mid-level layer or layers is/are advantageous in supporting vertical conduction (perpendicular to the planes of the interconnecting layers) between the local and global layers, while assisting in the flow field support for fluid flow in and out from the water splitting reaction at the membrane.

In certain examples, the composition used in a mid-level interconnecting layer may be any type of electrical transport "conducting material." The conducting material of the mid-level interconnecting layer may include a metal composition that is the same as or different from the metal composition of the local and/or global interconnecting layer. In certain embodiments, the metal composition of the mid-level interconnecting layer includes stainless steel.

Alternatively, the metal composition may be an oxidation-resistant metal such as, but not limited to, Pt, Au, Ti, Cr, Si, Zr, Y, Nb, and/or Al. In other examples, the composition or conducting material of the mid-level interconnecting layer may include a substrate (e.g., metal or polymer) that is coated with Pt, Nb, conducting oxides (such as W- or Nb-doped TiO₂, SnO₂, AZO), and/or other compositions. In some examples, the coating is a ternary layered carbide or nitride compound that may have the general formula Mₙ₊₁AXₙ, where n = 1-3, M is an early transition metal, A is an A group element, and X is nitrogen or carbon (i.e., a "MAX phase material"). Specific examples of such MAX phase materials include TiAlN, Ti₂AlC, TiSiC, and the like.

In other examples, the composition of the mid-level interconnecting layer may include a conducting material such as a conducting polymer or any oxygen-stable conducting organic composition. Non-limiting examples of a conducting polymer include poly(3,4-ethlenedioxythiophene) (PEDOT), poly(3,4-ethylenedioxythiophene) polystyrene sulfonate (PEDOT:PSS), polyaniline (PANI), polypyrrole (PPy), and derivatives thereof.

In certain examples, the conducting material for the mid-level interconnecting layer may include an oxidation resistant metal combined with a conducting polymer. For example, gold (Au) may be combined with PEDOT to provide the conducting material for the interconnecting layer.

The composition of the mid-level interconnecting layer may be determined or configured based on whether it is positioned on the anode or cathode side of the membrane, i.e., whether the layer is a part of the interface running an oxygen evolution reaction (OER) on the anode side of the cell or the interface running a hydrogen evolution reaction (HER) on the cathode side of the cell.

Various patterns or configurations for the mid-level interconnecting layer are possible. In one example, patterned lines of the (e.g., metal or polymer conducting) composition may extend along a single direction within a plane of the cell, wherein a gap or opening is present within the layer between adjacent lines. These patterned lines may be formed via low-cost patterning methods including extrusion, deposition, three-dimensional printing, or non-lithographic methods.

The patterned lines for the mid-level interconnecting layer may have thicker lines (as measured along the plane of material and/or as measured perpendicular to the plane of the layer of material) in comparison to the thickness of the lines of the local interconnecting layer. Additionally, the patterned lines for the mid-level interconnecting layer may be thinner than the patterned lines of the global interconnecting layer.

Further, to the extent multiple mid-level interconnecting layers are present, the patterned lines may increase in thickness for each layer in the direction from the local to the global interconnecting layer such that each subsequent layer positioned on top of the local interconnecting layer has a pattern that increases in thickness or width (as measured along the plane of material and/or as measured perpendicular to the plane of the layer of material).

In some embodiments, the patterned lines of each mid-level interconnecting layer may extend in a separate direction from an adjacent interconnecting layer (e.g., the local interconnecting layer and/or the global interconnecting layer). The separate direction may be perpendicular to the direction of patterned lines of the adjacent layer or at an angle between 0° and 90° (e.g., 45°). As noted above, this separate direction of the patterned lines between two adjacent layers is advantageous in creating the interconnecting structure between various patterned lines or segments of each layer, therein providing an improved or optimized conductivity and electrical transport in a direction perpendicular to the plane of the membrane (i.e., from the membrane to the electrode) while permitting flow of liquid and gas between the various layers.

Alternatively, the pattern of the mid-level interconnecting layer may include a mesh or web pattern. The pattern may be similar or different from the web pattern of the local or global interconnecting layer. For example, the pattern may have lines extending in two directions, perpendicular with each other to form a weave or mesh having square or rectangular openings present between the connected lines. In other examples, the web pattern may include an arrangement of the composition with openings in the layer in varying shapes such as circular, triangular, or hexagonal openings, etc. These patterns may be formed via similar methods as discussed above. Alternatively, the pattern could be formed via the formation of openings in a singular sheet of material (e.g., via laser ablation), wherein material is removed from the sheet to form the openings/pattern in the layer.

The size or dimensions of lines or patterns of material within the mid-level interconnecting layer may also be configurable. In certain examples, the patterned lines of metal or polymer composition that make up the mid-level interconnecting layer may have a thickness or diameter (as measured along the plane of material) and/or height (as measured perpendicular to the plane of the layer of material) that is larger than the adjacent interconnecting layer that is closer to the membrane (e.g., the local layer or another mid-level layer), while being smaller or thinner than the adjacent interconnecting layer that is closer to the electrode (e.g., the global layer or another mid-level layer).

In some examples, the thickness of the lines or patterns of material within the mid-level interconnecting layer may be on a micrometer to millimeter scale (e.g., a diameter or width of greater than 10 microns and less than 10 mm). In some examples, the lines or wires of material may have a diameter or width (as measured along the plane of material) and/or height (as measured perpendicular to the plane of the layer of material) in a range of 10 microns to 5 mm, 50 microns to 1 mm, 100 microns to 1 mm, 100-500 microns, or approximately 200 microns.

Further, openings or holes between adjacent segments of material of the mid-level interconnecting layer (e.g., as measured between adjacent lines of material running in a same direction or as defined by the widest measurement of an opening of a circular, rectangular, hexagonal, etc. patterned opening) may be in a range of 10 microns to 5 mm, 50 microns to 5 mm, 100 microns to 2 mm, 100 microns to 1 mm, or approximately 500 microns.

### Non-limiting Examples of Various Design Configurations for the Interconnecting Layers

As noted above, various configurations or arrangements for the plurality of interconnecting layers between the membrane and electrode of an electrolytic cell are possible.

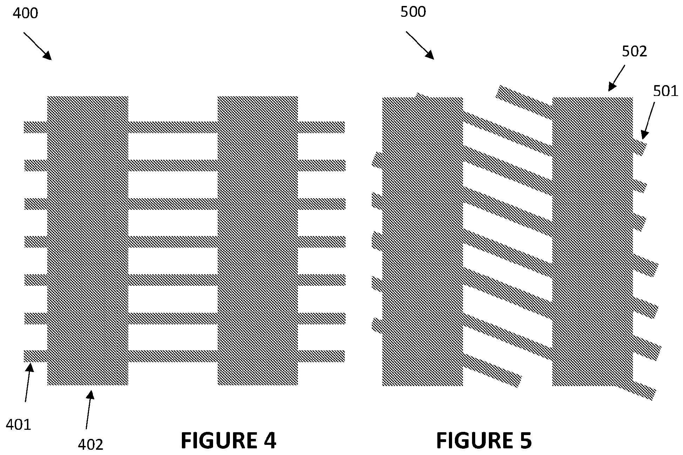

Figures 4-8 depict certain non-limiting examples of such configurations. In particular, Figure 4 depicts an example of an arrangement 400 including two interconnecting layers 401, 402. The local layer 401 has a series of ultra-thin line segments extending in a first direction. A global layer 402 is positioned adjacent to the local layer, having a series of thicker lines extending in a second direction perpendicular to the first direction. As depicted in the figure, the openings between adjacent lines of material of the local layer are spaced smaller than the openings between adjacent lines of the global layer.

Figure 5 depicts a similar arrangement 500 as Figure 4 with two interconnecting layers 501, 502. The main difference in this example is that the two layers do not have lines extending in directions perpendicular to each other. Instead, the local layer 501 has line segments extending in a direction that is approximately 45° from the direction of the line segments of the global layer 502. As noted above, other angles between 0° and 90° are possible for this offset.

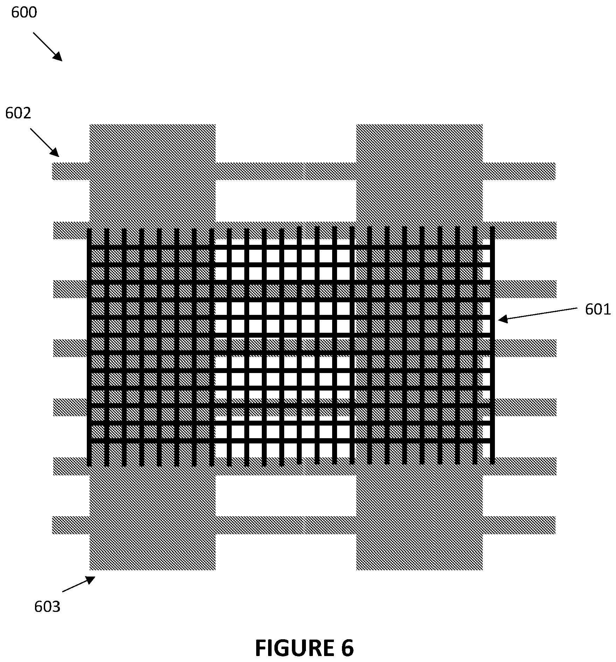

Figure 6 depicts an example of an arrangement 600 including three interconnecting layers 601, 602, 603. The local layer 601 has a mesh or webbed pattern, having fine patterned lines extending in two directions, perpendicular with each other to form a weave or mesh having square openings present between the connected lines. The mid-level layer 602 is positioned adjacent to the local layer has a series of thicker line segments extending in a first direction. A global layer 603 is positioned adjacent to the mid-level layer 602 such that the mid-level layer 602 is positioned between the local layer 601 and the global layer 603. The global layer 603 has a series of even thicker lines extending in a second direction perpendicular to the first direction. As depicted in the figure, the square openings present in the local layer 601 are smaller than the openings between adjacent lines of material of the mid-level layer 602, which are in turn smaller than the openings between adjacent lines of the global layer 603.

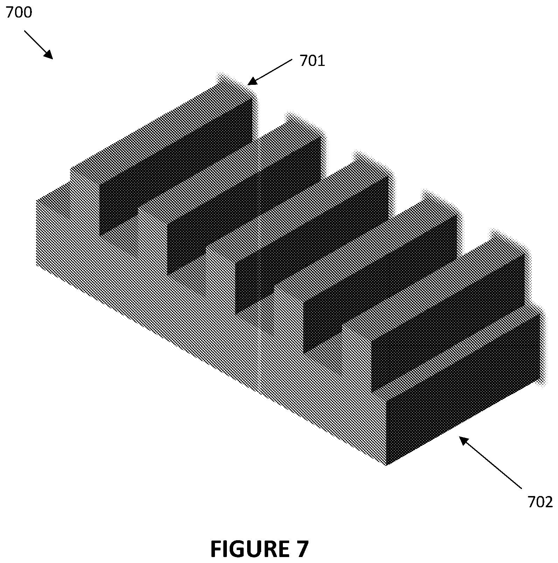

Figure 7 depicts a three-dimensional view of an arrangement 700 including two interconnecting layers 701, 702. The arrangement is similar to the example shown in Figure 4. In this figure, the local layer 701 has a series of ultra-thin line segments extending in a first direction. The line segments also have a width as measured along the first direction and a height or thickness as measured in a second direction perpendicular to the first direction. Openings are present between each line segment of the local layer. In this example of Figure 7, a single line segment of a second, global layer 702 is depicted extending in a third direction perpendicular to the first and second directions. The line segment is positioned adjacent to the local layer. The line segment has a thicker line than the line segments of the local layer.

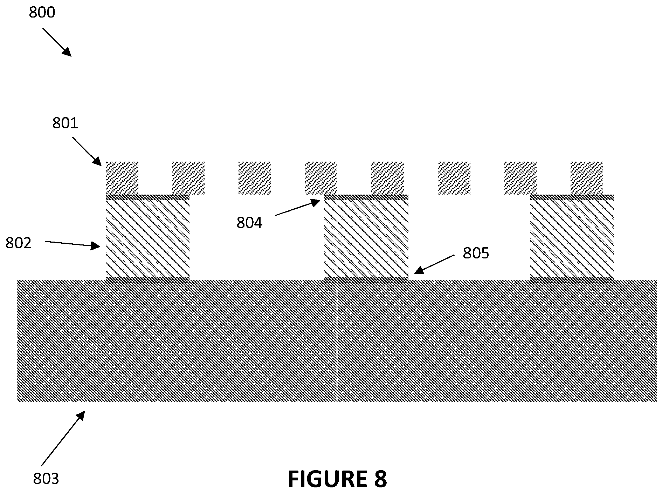

Figure 8 depicts a cross-section of an arrangement 800 of a plurality of interconnecting layers 801, 802, 803. In this example, a first, local layer 801 is provided with fine patterned lines extending in at least a first direction (e.g., the local layer may be a mesh or webbed pattern similar to the example in Figure 6), with openings present between the lines. A mid-level layer 802, positioned adjacent to the local layer 801, has a series of wider and thicker line segments also extending in the first direction. A global layer 803 is positioned adjacent to the mid-level layer 802, having a line segment extending in a second direction perpendicular to the first direction. As depicted in the figure, the openings present in the local layer 801 are smaller than the openings between adjacent lines of material of the mid-level layer 802. Additionally, in this example, the mid-level layer 802 includes a protective coating 804 on the surface adjacent to the local layer and a protective coating 805 on the surface adjacent to the global layer.

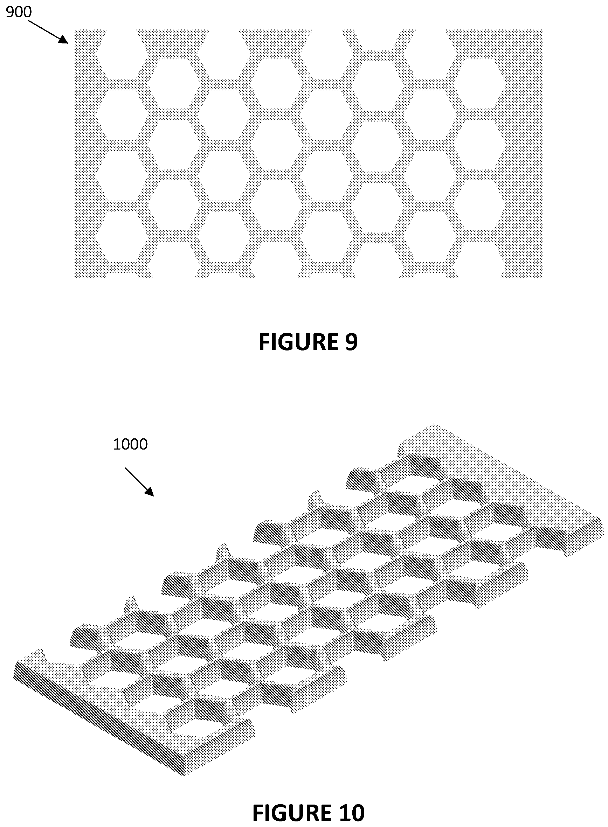

Figures 9 and 10 depict examples 900, 1000 of an alternative mesh or webbed pattern arrangement for a single layer. In these figures, webbed pattern includes hexagonal openings between linear segments of the material of the layer.

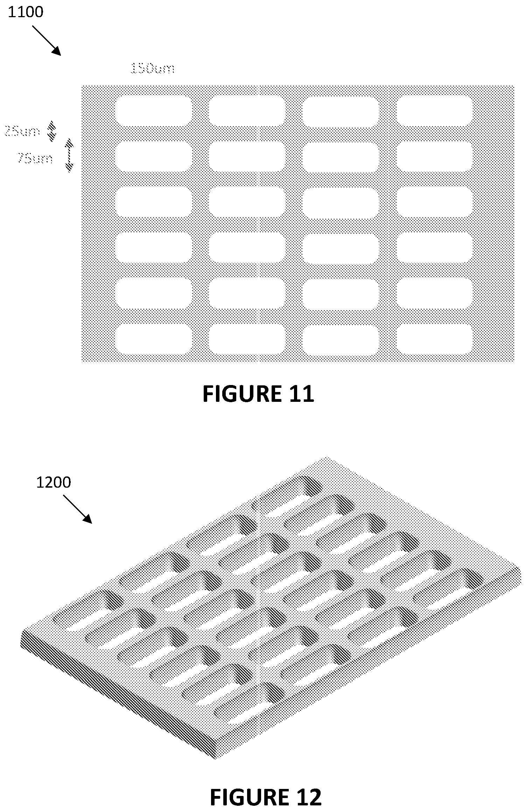

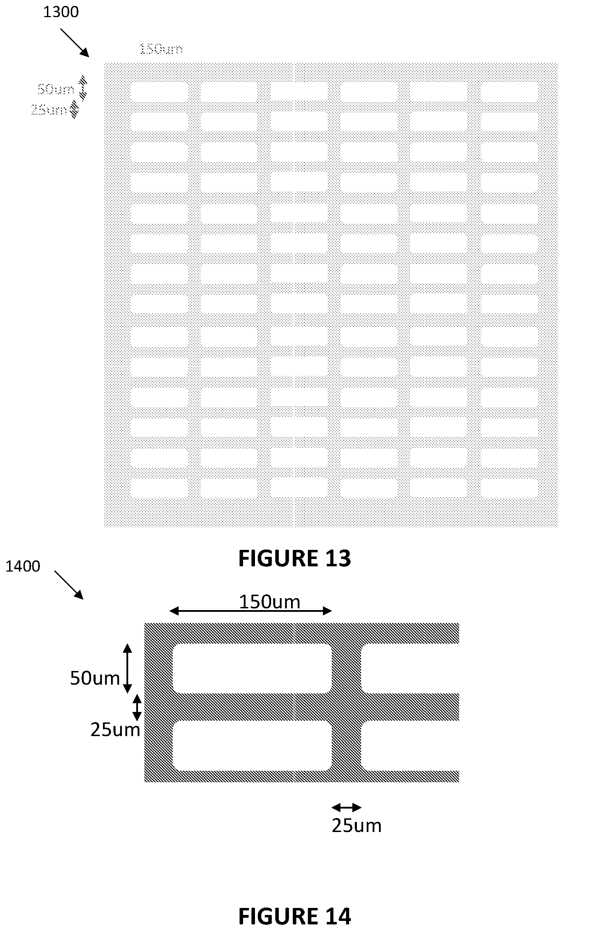

Figures 11-14 depict additional examples 1100, 1200, 1300, 1400 of an alternative mesh or webbed pattern arrangement for a single layer. In these figures, webbed pattern includes rectangular openings between linear segments of the material of the layer. In the examples of Figures 11 and 12, the linear segments forming the webbed pattern have a width of 25 microns and a length of 150 microns. The rectangular openings between adjacent segments measure 75 microns by 150 microns. In the examples of Figures 13 and 14, the linear segments forming the webbed pattern have a width of 25 microns and a length of 150 microns. The rectangular openings between adjacent segments measure 50 microns by 150 microns.

As noted above, alternative patterns or linear segment arrangements are possible for each layer of the plurality of interconnected layers, and the depicted examples are non-limiting examples.

### Formation of Electrolytic Cell Having a Plurality of Interconnecting Layers

As noted above, the plurality of layers may be interconnected with each other to provide a conduction down the "vias" from the top layer to the bottom layer of the interconnecting layers. In certain embodiments, the interconnecting layers may be joined together by any mechanism, device, or method other than pressure. In other words, the layers may be joined together via soldering, braising, friction-welding, laser welding, diffusion bonding, etc. to provide an improved electrical connection between the layers. This vertical conduction via soldering, welding, etc. provides an improvement over the conduction within the titanium felts and meshes of a conventional cell stack that may only have layers adhered or connected to each other via pressure.

In certain examples, the conductor structure of the interconnecting layers may include different materials/compositions and processes for the different dimensional requirements at different length scales for the different interconnecting layers.

For example, at least one layer may be an electroformed grid (e.g., electrodeposition on PR patterned substrate), made from Cu, Ni, Ti, Au, and/or Pt. Dimensions down to around 10 micrometers may be possible. This enables 1000-mesh (about 20 micrometer line space) with good open area percentage.

Additionally, in certain examples, at least one layer may be formed through the deposition of a conductor on a porous media such as battery separator. The conductor pattern may be transferred to the PEM membrane, and a catalyst coating may occur either before or after the transfer.

In some examples, an electrospun conductor lines (or catalyst-coated conductor lines) may be spun or cast onto a PEM surface to provide a non-uniform porous layer. The conductor may be metallic (e.g., Pt) or a conducting oxide (e.g., W-TiO₂, AZO, etc.) The conductor lines may include a low-angle deposition onto a roughened or porous PEM. In some examples, the PEM may have a patterned surface with block-copolymer. The PEM surface may be coated with a mix of conducting and non-conducting polymer, and the coating/drying process may be conducted to encourage a 'lamellar phase' morphology. The polymer may be a PEDOT:PSS or similar, wherein the PEDOT is the conductor, and the PSS is sulphonic acid. Alternatively, the non-conducting component polymer might include the PFSA ionomer. To induce better "striping" of this phase separation, Directed Self-Assembly DSA approaches may be followed, including substrate patterning.

In some examples, interference lithography lines may be formed directly onto PEM. Alternatively, the lines may be imprinted to pattern the PEM surface followed by deposition.

Regarding certain design requirements for the interconnecting layers, there may be certain conductivity requirements and material selection based on various dimensions of the interconnecting layers.

For example, based on the various compositions listed in the tables below, a mesh of 10 micron x 5 micron wires with 100 micron openings between wire segments serving an area 500 micron long (i.e., with a 500 micron "global interconnect") has a current in the served area of approx. 5 mA. The impedance to 250 microns from the bus is approx. 2 Ohms (Ti); and the V drop is 10 mA.

Additionally, a mesh of 25 micron x 25 micron wires with 200 micron spacing serving an area 2 mm long has a current in the served area of approx. 40 mA. The impedance to 1000 microns from the bus is approx. 0.7 Ohms (Ti); and the V drop is 30 mV.

| | Ti | Au | Cu | SS | Graphite |
|---|---|---|---|---|---|
| | 4.20E-07 | 2.44E-08 | 1.70E-08 | 1.00E-07 | 8.00E-04 Ohm.m |

| Distance, micron | Resistance, Ohms | | | | |
|---|---|---|---|---|---|
| 50 | 0.42 | 0.02 | 0.02 | 0.10 | 800.00 |
| 100 | 0.84 | 0.05 | 0.03 | 0.20 | 1600.00 |
| 150 | 1.26 | 0.07 | 0.05 | 0.30 | 2400.00 |
| 200 | 1.68 | 0.10 | 0.07 | 0.40 | 3200.00 |
| 250 | 2.10 | 0.12 | 0.09 | 0.50 | 4000.00 |

| | Ti | Au | Cu | SS | Graphite |
|---|---|---|---|---|---|
| | 4.20E-07 | 2.44E-08 | 1.70E-08 | 1.00E-07 | 8.00E-04 Ohm.m |

| Distance, microns | Resistance, Ohms | | | | |
|---|---|---|---|---|---|
| 200 | 0.13 | 0.01 | 0.01 | 0.03 | 256.00 |
| 400 | 0.27 | 0.02 | 0.01 | 0.06 | 512.00 |
| 600 | 0.40 | 0.02 | 0.02 | 0.10 | 768.00 |
| 800 | 0.54 | 0.03 | 0.02 | 0.13 | 1024.00 |
| 1000 | 0.67 | 0.04 | 0.03 | 0.16 | 1280.00 |

### Coated Interconnecting Layers

In conjunction with the disclosure above, one or more of the hierarchical interconnecting layers may be coated with an insulator. Such a coating may be added to one or more of the layers after the plurality of interconnecting layers have been fixed to each other at their connecting joints via soldering, welding, etc.

This coating is advantageous in protecting the composition of various interconnecting layers (e.g., steel) from a corrosive environment within the electrochemical/electrolyzer cell (particularly on the oxygen side of the cell). Specifically, the various interconnecting layers may be exposed to low pH (sulphonic acid membrane), high oxidizing voltage (e.g., 2V vs. H2), high temperatures (e.g., 80°C), and/or radicals.

Currently, the state of the art uses platinum-coated titanium for such an interconnecting layer. This has various disadvantages due to the high cost of platinum, as well as the cost and difficulty in processing titanium. Further, titanium has limitations or difficulties in joining electrically.

As disclosed herein, a polymeric composition such as fluoroethylene propylene (FEP), polytetrafluoroethylene (PTFE), polypropylene (PP), or polyethylene (PE) may be used as the coating material for the stainless-steel interconnecting layers.

In certain examples, the polymer coating may not be provided or needed for a titanium mesh interconnecting layer (e.g., the local interconnecting layer). As such, in the coating process for the plurality of interconnecting layers, a mask may be positioned to cover the (e.g., local) interconnecting layer, wherein the remaining layers of the plurality of interconnecting layers (e.g., the stainless-steel layers) are coated with the polymer in a solution of gas phase.

In this process, the mask may be any composition configured to temporarily adhere to one or more of the interconnecting layers, which can be subsequently removed from the layer following the subsequent coating acts. The mask may be a film composition having surface properties configured to minimize a coating material used to coat the remaining uncovered layers from adhering to the film composition. This is advantageous in reducing the amount of the coating material being used for the plurality of interconnecting layers by minimizing or eliminating any coating material from adhering to the local interconnecting layer or its mask/cover that is adhered or covering the local interconnecting layer.

Following the addition of the mask or cover to one or more of the interconnecting layers, a coating material may be applied to the remaining uncovered interconnecting layers (e.g., the layers that include stainless-steel) to provide improved surface properties for the uncovered layers while advantageously reducing the overall amount of coating material used due to the covered layer(s) not having the coating material added.

In some examples, the coating material includes a composition configured to protect the uncovered interconnecting layers from a corrosive environment within the electrochemical/electrolyzer cell. As noted above, this composition may include an antioxidant. As such, any of the compounds or compositions discussed above may be applicable here. In some cases, the coating material includes a polymeric composition such as fluoroethylene propylene (FEP), polytetrafluoroethylene (PTFE), polypropylene (PP), or polyethylene (PE).

In certain examples, the coating material is applied to the uncovered/unmasked layer(s) in a liquid or gaseous solution. In one example, a polymeric coating solution is applied to the uncovered interconnecting layers in a gas phase.

In certain examples, the coating process only partially coats the uncovered interconnecting layers. These partially coated interconnecting layers may then be further subjected to a post-plating with platinum, wherein only exposed conducting regions of the partially coated layers are plated with platinum. Again, this is advantageous in reducing the overall amount of an expensive coating compound or composition such as platinum being used in the coating process, while retaining the important features for the interconnecting layers (e.g., anti-oxidation/anti-corrosion).

Following the coating process(es), in a subsequent act, the mask is removed from the covered (e.g., local) interconnecting layer.

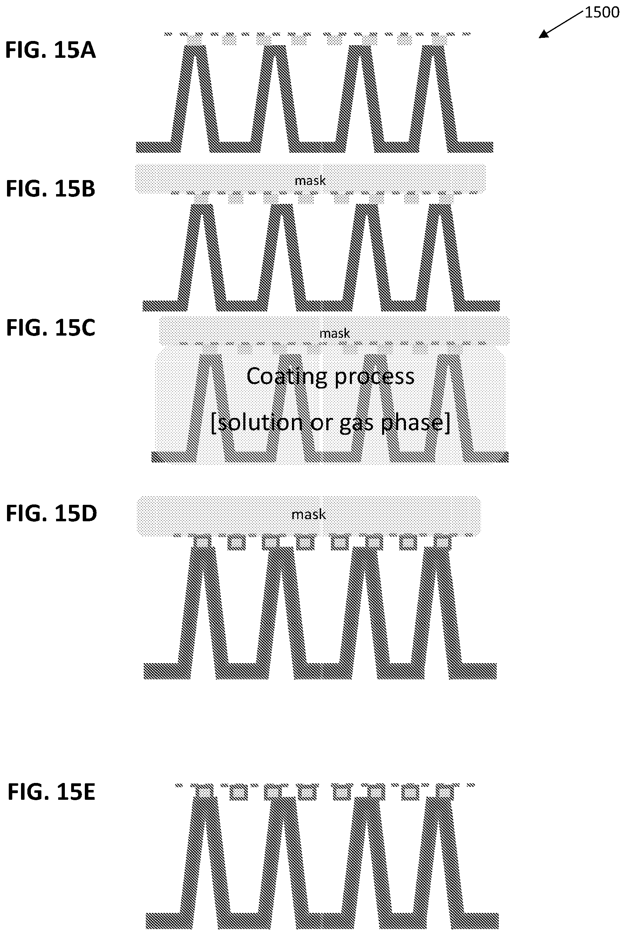

Figures 15A-15E depict an example 1500 of various stages of coating the plurality of interconnecting layer. Figure 15A depicts a starting, uncoated plurality of layers with the dashed-line representing the local interconnecting layer, the squares representing the mid-level layer and the zig-zag folded metal representing the global interconnecting layer.

Figure 15B depicts a mask positioned over the local interconnecting layer. Figure 15C depicts the coating of the mid and global layers while the mask layer protects/prevents the local layer from being coated. Figure 15D depicts a coating layer over the mid- and global layers following the coating process with the mask still attached/covering the local layer. Figure 15E depicts the final coated plurality of interconnecting layers following removal of the mask.

Such an arrangement having the polymer coating on the stainless-steel interconnecting layers is advantageous in reducing the overall cost of the subassembly due to the limited or reduced use of expensive corrosion resistant metals such as platinum.

It is intended that the foregoing detailed description be regarded as illustrative rather than limiting and that it is understood that the following claims including all equivalents are intended to define the scope of the present invention as defined in the appended claims.

## Claims

1. An electrochemical cell (300) comprising:
a first electrode (302);
a membrane (306); and
a plurality of interconnecting layers (308) positioned between the first electrode and the membrane (306),
wherein the plurality of interconnecting layers (308) comprise a local interconnecting layer (311) positioned adjacent to the membrane (306) and a global interconnecting layer (313) positioned adjacent to the first electrode (302),
wherein the global interconnecting layer (313) provides flow field channels for fluid flow in and out of the electrochemical cell (300),
**characterised in that** patterned lines or segments of the global interconnecting layer (313) have a diameter or width as measured along a plane of the global interconnecting layer (313) that is greater than a diameter or width of patterned lines or line segments of the local interconnecting layer (311) as measured along a plane of the local interconnecting layer (311), and
**in that** the plurality of interconnecting layers (308) provides a vertical conduction in a direction extending along an axis running between the first electrode (302) and the membrane (306).

2. The cell of claim 1, wherein the local interconnecting layer (311) of the plurality of interconnecting layers (308) comprises an oxidation-resistant metal, and
wherein the oxidation-resistant metal comprises Pt, Au, Ti, Cr, Si, Zr, Y, Nb, Al, or a combination thereof.

3. The cell of claim 1 or 2, wherein the local interconnecting layer (311) of the plurality of interconnecting layers (308) comprises a substrate that is coated with an oxidation-resistant composition.

4. The cell of claim 3, wherein the oxidation-resistant composition is Pt, Nb, a conducting oxide, a ternary layered carbide or nitride compound, or a combination thereof,
wherein the conducting oxide is W- or Nb-doped TiO₂, SnO₂, or AZO, and
wherein the ternary layered carbide or nitride compound is TiAlN, Ti₂AlC, TiSiC, or any MAX phase material having a formula of Mₙ₊₁AXₙ, where n = 1-3, M is an early transition metal, A is an A group element, and X is nitrogen or carbon.

5. The cell of any of the preceding claims, wherein the local interconnecting layer (311) of the plurality of interconnecting layers (308) comprises a conducting polymer or an oxygen-stable conducting organic composition or an oxidation-resistant metal, and
wherein the conducting polymer is poly(3,4-ethlenedioxythiophene) (PEDOT), poly(3,4-ethylenedioxythiophene) polystyrene sulfonate (PEDOT:PSS), polyaniline (PANI), polypyrrole (PPy), or a derivative thereof.

6. The cell of any of the preceding claims, wherein the patterned lines of the local interconnecting layer (311) extend in a same direction,
wherein the diameter or the width of the patterned lines is in a range of 1-50 microns, and
wherein the local interconnecting layer (311) comprises openings between adjacent segments of material in a range of 5-100 microns as measured along the plane of the local interconnecting layer.

7. The cell of any of the preceding claims, wherein the local interconnecting layer (311) comprises a mesh or web pattern of material having openings in the local interconnecting layer between connected segments of the material,
wherein the diameter or the width of the segments of the material is in a range of 1-50 microns, and
wherein the local interconnecting layer (311) comprises openings between adjacent segments of the material in a range of 5-100 microns as measured along the plane of the local interconnecting layer (311).

8. The cell of any of the preceding claims, wherein the patterned lines or the line segments of the local interconnecting layer (311) extend in a first direction, and
wherein the patterned lines or the line segments of the global interconnecting layer (313) extend in a second direction different from the first direction.

9. The cell of any of the preceding claims, wherein the diameters or the widths of the patterned lines or the line segments of the global interconnecting layer (313) are in a range of 0.1-10 mm as measured along a plane of the global interconnecting layer, and
wherein the global interconnecting layer (313) comprises openings between adjacent lines of material in a range of 0.1-10 mm as measured along the plane of the local interconnecting layer (311).

10. The cell of any of the preceding claims, wherein the global interconnecting layer (313) of the plurality of interconnecting layers (308) comprises a single metallic structure having a plurality of fins extending in a direction of the axis running between the first electrode (302) and the membrane (306), and
wherein the fins provide the flow field channels for the cell.

11. The cell of any of the preceding claims, wherein the plurality of interconnecting layers (308) further comprises a mid-level interconnecting layer (312) positioned between the local interconnecting layer (311) and the global interconnecting layer (313).

12. The cell of claim 11, wherein each of the local interconnecting layer (311), the mid-level interconnecting layer (312), and the global interconnecting layer (313) comprises patterned lines of material,
wherein the patterned lines of the global interconnecting layer (313) have a diameter or width as measured along a plane of the global interconnecting layer (313) that is greater than a diameter or width of the patterned lines of the mid-level interconnecting layer (312) as measured along a plane of the mid-level interconnecting layer (312), and
wherein the diameter or width of the mid-level interconnecting layer (312) is greater than a diameter or width of the patterned lines of the local interconnecting layer (311) as measured along a plane of the local interconnecting layer (311).

13. The cell of claim 12, wherein the patterned lines of the mid-level interconnecting layer (312) have diameters or widths in a range of 10 microns to 5 mm as measured along a plane of the mid-level interconnecting layer (312), and
wherein the global interconnecting layer (313) comprises openings between adjacent lines of the material in a range of 50 microns to 5 mm as measured along the plane of the mid-level interconnecting layer (312).

14. The cell of any of the preceding claims, wherein the cell (300) is configured to operate with 200 mV or less of pure resistive loss when operating at a current density of at least 3 Amps/cm².

15. A method of forming a plurality of interconnected layers for an electrochemical cell (300), the method comprising:
providing a plurality of interconnecting layers (308);
**characterised in that**:
the interconnecting layers (308) comprise a local interconnecting layer (311), at least one mid-level interconnecting layer (312), and a global interconnecting layer (313);
the method being further **characterised by** the following steps:
positioning the at least one mid-level interconnecting layer (312) on a surface of the global interconnecting layer (313);
positioning the local interconnecting layer (311) on a surface of a mid-level interconnecting layer (312) of the at least one mid-level interconnecting layer (312) such that the at least one mid-level interconnecting layer (312) is positioned between the local interconnecting layer (311) and the global interconnecting layer (313);
covering at least one surface of the local interconnecting layer (311) with a mask layer;
applying a coating to the plurality of interconnecting layers (308), wherein the coating covers surfaces of the at least one mid-level interconnecting layer (312) and the global connecting layer (313) with the mask layer preventing the local interconnecting layer (311) from being coated; and
removing the mask layer from the local interconnecting layer (311).

## Patentansprüche

1. Eine elektrochemische Zelle (300), umfassend:
eine erste Elektrode (302);
eine Membran (306); und
eine Vielzahl von Verbindungsschichten (308), die zwischen der ersten Elektrode und der Membran (306) angeordnet sind,
wobei die Vielzahl von Verbindungsschichten (308) eine lokale Verbindungsschicht (311), die benachbart zur Membran (306) angeordnet ist, und eine globale Verbindungsschicht (313) , die benachbart zur ersten Elektrode (302) angeordnet ist, umfasst,
wobei die globale Verbindungsschicht (313) Strömungskanäle für den Flüssigkeitsstrom in die und aus der elektrochemischen Zelle (300) bereitstellt,
**dadurch gekennzeichnet, dass**
gemusterte Linien oder Segmente der globalen Verbindungsschicht (313), gemessen entlang einer Ebene der globalen Verbindungsschicht (313), einen Durchmesser oder eine Breite aufweisen, der oder die größer ist als ein Durchmesser oder eine Breite gemusterter Linien oder Liniensegmente der lokalen Verbindungsschicht (311), gemessen entlang einer Ebene der lokalen Verbindungsschicht (311), und
die Vielzahl von Verbindungsschichten (308) eine vertikale Leitfähigkeit in einer Richtung bereitstellen, die sich entlang einer Achse erstreckt, die zwischen der ersten Elektrode (302) und der Membran (306) verläuft.

2. Die Zelle nach Anspruch 1, wobei die lokale Verbindungsschicht (311) der Vielzahl von Verbindungsschichten (308) ein oxidationsbeständiges Metall umfasst, und
wobei das oxidationsbeständige Metall Pt, Au, Ti, Cr, Si, Zr, Y, Nb, Al oder eine Kombination davon umfasst.

3. Die Zelle nach Anspruch 1 oder 2, wobei die lokale Verbindungsschicht (311) der Vielzahl von Verbindungsschichten (308) ein Substrat umfasst, das mit einer oxidationsbeständigen Zusammensetzung beschichtet ist.

4. Die Zelle nach Anspruch 3, wobei die oxidationsbeständige Zusammensetzung Pt, Nb, ein leitfähiges Oxid, eine ternäre Schichtkarbid- oder Nitridverbindung oder eine Kombination davon ist,
wobei das leitfähige Oxid W- oder Nb-dotiertes TiO₂, SnO₂ oder AZO ist, und
wobei die ternäre Schichtkarbid- oder Nitridverbindung TiAIN, Ti₂AlC, TiSiC oder ein beliebiges MAX-Phasenmaterial mit der Formel Mₙ₊₁AXₙ ist, wobei n = 1-3 ist, M ein frühes Übergangsmetall ist, A ein Element der A-Gruppe ist und X Stickstoff oder Kohlenstoff ist.

5. Die Zelle nach einem der vorhergehenden Ansprüche, wobei die lokale Verbindungsschicht (311) der Vielzahl von Verbindungsschichten (308) ein leitfähiges Polymer oder eine sauerstoffstabile leitfähige organische Zusammensetzung oder ein oxidationsbeständiges Metall umfasst, und
wobei das leitfähige Polymer Poly(3,4-ethylendioxythiophen) (PEDOT), Poly(3, 4-ethylendioxythiophen)polystyrolsulfonsäure (PEDOT:PSS), Polyanilin (PANI), Polypyrrol (PPy) oder ein Derivat davon ist.

6. Die Zelle nach einem der vorhergehenden Ansprüche, wobei sich die gemusterten Linien der lokalen Verbindungsschicht (311) in derselben Richtung erstrecken,
wobei der Durchmesser oder die Breite der gemusterten Linien in einem Bereich von 1 bis 50 Mikrometern liegt, und
wobei, gemessen entlang der Ebene der lokalen Verbindungsschicht, die lokale Verbindungsschicht (311) Öffnungen zwischen benachbarten Materialsegmenten in einem Bereich von 5 bis 100 Mikrometern umfasst.

7. Die Zelle nach einem der vorhergehenden Ansprüche, wobei die lokale Verbindungsschicht (311) ein Netz- oder Gewebemuster aus Material umfasst, das Öffnungen in der lokalen Verbindungsschicht zwischen verbundenen Segmenten des Materials aufweist,
wobei der Durchmesser oder die Breite der Segmente des Materials in einem Bereich von 1 bis 50 Mikrometern liegt, und
wobei, gemessen entlang der Ebene der lokalen Verbindungsschicht (311), die lokale Verbindungsschicht (311) Öffnungen zwischen benachbarten Segmenten des Materials in einem Bereich von 5 bis 100 Mikrometern umfasst.

8. Die Zelle nach einem der vorhergehenden Ansprüche, wobei sich die gemusterten Linien oder die Liniensegmente der lokalen Verbindungsschicht (311) in einer ersten Richtung erstrecken und
wobei sich die gemusterten Linien oder die Liniensegmente der globalen Verbindungsschicht (313) in einer zweiten Richtung erstrecken, die sich von der ersten Richtung unterscheidet.

9. Die Zelle nach einem der vorhergehenden Ansprüche, wobei, gemessen entlang einer Ebene der globalen Verbindungsschicht, die Durchmesser oder Breiten der gemusterten Linien oder der Liniensegmente der globalen Verbindungsschicht (313) in einem Bereich von 0,1 bis 10 mm liegen, und
wobei, gemessen entlang der Ebene der lokalen Verbindungsschicht (311), die globale Verbindungsschicht (313) Öffnungen zwischen benachbarten Materiallinien in einem Bereich von 0,1 bis 10 mm umfasst.

10. Die Zelle aus einem der vorhergehenden Ansprüche, wobei die globale Verbindungsschicht (313) der Vielzahl von Verbindungsschichten (308) eine einzelne Metallstruktur mit einer Vielzahl von Lamellen umfasst, die sich in Richtung der Achse zwischen der ersten Elektrode (302) und der Membran (306) erstrecken, und
wobei die Lamellen die Strömungskanäle für die Zelle bereitstellen.

11. Die Zelle aus einem der vorhergehenden Ansprüche, wobei die Vielzahl von Verbindungsschichten (308) ferner eine mittlere Verbindungsschicht (312) umfasst, die zwischen der lokalen Verbindungsschicht (311) und der globalen Verbindungsschicht (313) angeordnet ist.

12. Die Zelle nach Anspruch 11, wobei jede der lokalen Verbindungsschicht (311), der mittleren Verbindungsschicht (312) und der globalen Verbindungsschicht (313) gemusterte Materiallinien umfasst,
wobei, gemessen entlang einer Ebene der globalen Verbindungsschicht (313), die gemusterten Linien der globalen Verbindungsschicht (313) einen Durchmesser oder eine Breite aufweisen, der oder die größer ist als ein Durchmesser oder eine Breite der gemusterten Linien der mittleren Verbindungsschicht (312) gemessen entlang einer Ebene der mittleren Verbindungsschicht (312), und
wobei, gemessen entlang einer Ebene der lokalen Verbindungsschicht (311), der Durchmesser oder die Breite der mittleren Verbindungsschicht (312) größer ist als ein Durchmesser oder eine Breite der gemusterten Linien der lokalen Verbindungsschicht (311).

13. Die Zelle nach Anspruch 12, wobei, gemessen entlang einer Ebene der mittleren Verbindungsschicht (312), die gemusterten Linien der mittleren Verbindungsschicht (312) Durchmesser oder Breiten im Bereich von 10 Mikrometern bis 5 mm aufweisen, und
wobei, gemessen entlang der Ebene der mittleren Verbindungsschicht (312), die globale Verbindungsschicht (313) Öffnungen zwischen benachbarten Materiallinien in einem Bereich von 50 Mikrometern bis 5 mm umfasst.

14. Die Zelle aus einem der vorhergehenden Ansprüche, wobei die Zelle (300) so ausgestaltet ist, um mit 200 mV oder weniger reinem Widerstandsverlust zu arbeiten, wenn sie mit einer Stromdichte von mindestens 3 A/cm² betrieben wird.

15. Ein Verfahren zum Bilden einer Vielzahl von Verbindungsschichten für eine elektrochemische Zelle (300), wobei das Verfahren umfasst:
Bereitstellen einer Vielzahl von Verbindungsschichten (308);
**dadurch gekennzeichnet, dass**
die Verbindungsschichten (308) eine lokale Verbindungsschicht (311), mindestens eine mittlere Verbindungsschicht (312) und eine globale Verbindungsschicht (313) umfassen;
wobei das Verfahren ferner durch die folgenden Schritte gekennzeichnet ist:
Positionieren der mindestens einen mittleren Verbindungsschicht (312) auf einer Oberfläche der globalen Verbindungsschicht (313);
Positionieren der lokalen Verbindungsschicht (311) auf einer Oberfläche einer mittleren Verbindungsschicht (312) der mindestens einen mittleren Verbindungsschicht (312), so dass die mindestens eine mittlere Verbindungsschicht (312) zwischen der lokalen Verbindungsschicht (311) und der globalen Verbindungsschicht (313) positioniert ist;
Bedecken mindestens einer Oberfläche der lokalen Verbindungsschicht (311) mit einer Maskenschicht;
Aufbringen einer Beschichtung auf die mehreren Verbindungsschichten (308), wobei die Beschichtung Oberflächen der mindestens einen mittleren Verbindungsschicht (312) und der globalen Verbindungsschicht (313) mit der Maskenschicht bedeckt, die verhindert, dass die lokale Verbindungsschicht (311) beschichtet wird; und
Entfernen der Maskenschicht von der lokalen Verbindungsschicht (311).

## Revendications

1. Cellule électrochimique (300) comprenant :
une première électrode (302) ;
une membrane (306) ; et
une pluralité de couches d'interconnexion (308) positionnées entre la première électrode (302) et la membrane (306),
dans laquelle la pluralité de couches d'interconnexion (308) comprend une couche d'interconnexion locale (311) positionnée adjacente à la membrane (306) et une couche d'interconnexion globale (313) positionnée adjacente à la première électrode (302),
dans laquelle la couche d'interconnexion globale (313) fournit des canaux de champ d'écoulement pour l'écoulement de fluide en entrée et en sortie de la cellule électrochimique (300),
**caractérisée en ce que** des lignes à motifs ou des segments de la couche d'interconnexion globale (313) présentent un diamètre ou une largeur tels que mesurés le long d'un plan de la couche d'interconnexion globale (313) qui est supérieur(e) à un diamètre ou une largeur des lignes à motifs ou segments de ligne de la couche d'interconnexion locale (311) tels que mesurés le long d'un plan de la couche d'interconnexion locale (311), et
**en ce que** la pluralité de couches d'interconnexion (308) fournit une conduction verticale dans une direction s'étendant le long d'un axe s'étendant entre la première électrode (302) et la membrane (306).

2. Cellule selon la revendication 1, dans laquelle la couche d'interconnexion locale (311) de la pluralité de couches d'interconnexion (308) comprend un métal résistant à l'oxydation, et
dans laquelle le métal résistant à l'oxydation comprend du Pt, Au, Ti, Cr, Si, Zr, Y, Nb, AI, ou une combinaison de ceux-ci.

3. Cellule selon la revendication 1 ou 2, dans laquelle la couche d'interconnexion locale (311) de la pluralité de couches d'interconnexion (308) comprend un substrat qui est revêtu d'une composition résistante à l'oxydation.

4. Cellule selon la revendication 3, dans laquelle la composition résistante à l'oxydation est du Pt, du Nb, un oxyde conducteur, un composé carbure ou nitrure stratifié ternaire, ou une combinaison de ceux-ci,
dans laquelle l'oxyde conducteur est du TiO₂, du SnO₂ ou de l'AZO dopé au W ou au Nb,
dans laquelle le composé carbure ou nitrure stratifié ternaire est du TiAlN, du Ti₂AlC ou du TiSiC, ou tout matériau de phase MAX ayant pour formule Mₙ₊₁AXₙ, où n=1-3, M est un métal de transition antérieur, A est un élément du groupe A, et X est un atome d'azote ou un atome de carbone.

5. Cellule selon l'une des revendications précédentes, dans laquelle la couche d'interconnexion locale (311) de la pluralité de couches d'interconnexion (308) comprend un polymère conducteur ou une composition organique conductrice stable à l'oxygène ou un métal résistant à l'oxydation, et
dans laquelle le polymère conducteur est le poly(3,4-éthylènedioxythiophène) (PEDOT), le poly(3,4-éthylènedioxythiophène) poly(styrène sulfonate) (PEDOT:PSS), la polyaniline (PANI), le polypyrrole (PPy), ou un dérivé de ceux-ci.

6. Cellule selon l'une des revendications précédentes, dans laquelle les lignes à motifs de la couche d'interconnexion locale (311) s'étendent dans une même direction,
dans laquelle le diamètre ou la largeur des lignes à motifs sont dans une plage de 1-50 microns, et
dans laquelle la couche d'interconnexion locale (311) comprend des ouvertures entre des segments adjacents du matériau dans une plage de 5-100 microns telles que mesurées le long du plan de la couche d'interconnexion locale.

7. Cellule selon l'une des revendications précédentes, dans laquelle la couche d'interconnexion locale (311) comprend un motif à maille ou en réseau de matériau présentant des ouvertures dans la couche d'interconnexion locale entre des segments connectés du matériau,
dans laquelle le diamètre ou la largeur des segments du matériau sont dans une plage de 1-50 microns, et
dans laquelle la couche d'interconnexion locale (311) comprend des ouvertures entre des segments adjacents du matériau dans une plage de 5-100 microns telles que mesurées le long du plan de la couche d'interconnexion locale (311).

8. Cellule selon l'une des revendications précédentes, dans laquelle les lignes à motifs ou les segments de ligne de la couche d'interconnexion locale (311) s'étendent dans une première direction, et
dans laquelle les lignes à motifs ou les segments de ligne de la couche d'interconnexion globale (313) s'étendent dans une deuxième direction différente de la première direction.

9. Cellule selon l'une des revendications précédentes, dans laquelle les diamètres ou les largeurs des lignes à motifs ou des segments de ligne de la couche d'interconnexion globale (313) sont dans une plage de 0,1-10 mm tels que mesurés le long d'un plan de la couche d'interconnexion globale, et
dans laquelle la couche d'interconnexion globale (313) comprend des ouvertures entre des lignes adjacentes du matériau dans une plage de 0,1-10 mm telles que mesurées le long du plan de la couche d'interconnexion locale (311).

10. Cellule selon l'une des revendications précédentes, dans laquelle la couche d'interconnexion globale (313) de la pluralité de couches d'interconnexion (308) comprend une seule structure métallique présentant une pluralité d'ailettes s'étendant dans une direction de l'axe s'étendant entre la première électrode (302) et la membrane (306), et
dans laquelle les ailettes fournissent les canaux de champ d'écoulement pour la cellule.

11. Cellule selon l'une des revendications précédentes, dans laquelle la pluralité de couches d'interconnexion (308) comprend en outre une couche d'interconnexion de niveau intermédiaire (312) positionnée entre la couche d'interconnexion locale (311) et la couche d'interconnexion globale (313).

12. Cellule selon la revendication 11, dans laquelle chacune de la couche d'interconnexion locale (311), de la couche d'interconnexion de niveau intermédiaire (312) et de la couche d'interconnexion globale (313) comprend des lignes à motifs de matériau,
dans laquelle les lignes à motifs de la couche d'interconnexion globale (313) présentent un diamètre ou une largeur tels que mesurés le long d'un plan de la couche d'interconnexion globale (313) qui est supérieur(e) à un diamètre ou une largeur des lignes à motifs de la couche d'interconnexion de niveau intermédiaire tels que mesurés le long d'un plan de la couche d'interconnexion de niveau intermédiaire (312), et
dans laquelle le diamètre ou la largeur de la couche d'interconnexion de niveau intermédiaire (312) est supérieur(e) à un diamètre ou une largeur des lignes à motifs de la couche d'interconnexion locale (311) tels que mesurés le long d'un plan de la couche d'interconnexion locale (311).

13. Cellule selon la revendication 12, dans laquelle les lignes à motifs de la couche d'interconnexion de niveau intermédiaire (312) présentent des diamètres ou des largeurs dans une plage de 10 microns à 5 mm tels que mesurés le long d'un plan de la couche d'interconnexion de niveau intermédiaire (312), et
dans laquelle la couche d'interconnexion globale (313) comprend des ouvertures entre des lignes adjacentes du matériau dans une plage de 50 microns à 5 mm telles que mesurées le long du plan de la couche d'interconnexion de niveau intermédiaire (312).

14. Cellule selon l'une des revendications précédentes, dans laquelle la cellule (300) est configurée pour fonctionner avec 200 mV ou moins de perte par effet Joule pure lorsqu'elle fonctionne avec une densité de courant d'au moins 3 A/cm².

15. Procédé de formation d'une pluralité de couches interconnectées pour un cellule électrochimique (300), le procédé comprenant :
la fourniture d'une pluralité de couches d'interconnexion (308) ;
**caractérisé en ce que** :
les couches d'interconnexion (308) comprennent une couche d'interconnexion locale (311), au moins une couche d'interconnexion de niveau intermédiaire (312), et une couche d'interconnexion globale (313) ;
le procédé étant en outre **caractérisé par** les étapes suivantes :
le positionnement de l'au moins une couche d'interconnexion de niveau intermédiaire (312) sur une surface de la couche d'interconnexion globale (313) ;
le positionnement de la couche d'interconnexion locale (311) sur une surface d'une couche d'interconnexion de niveau intermédiaire (312) de l'au moins une couche d'interconnexion de niveau intermédiaire (312) de telle sorte que l'au moins une couche d'interconnexion de niveau intermédiaire (312) est positionnée entre la couche d'interconnexion locale (311) et la couche d'interconnexion globale (313) ;
la couverture d'au moins une surface de la couche d'interconnexion locale (311) avec une couche masque ;
l'application d'un revêtement sur la pluralité de couches d'interconnexion (308), dans lequel le revêtement recouvre des surfaces de l'au moins une couche d'interconnexion de niveau intermédiaire (312) et la couche de connexion globale (313) avec la couche masque empêchant la couche d'interconnexion locale (311) d'être revêtue ; et
le retrait de la couche masque de la couche d'interconnexion locale (311).
